# EUROPÄISCHE PATENTSCHRIFT

(11) **EP 1 790 531 B1**
(45) Veröffentlichungstag und Bekanntmachung des Hinweises auf die Patenterteilung: **24.09.2008**
(21) Anmeldenummer: 06123145.2
(22) Anmeldetag: 30.10.2006
(51) Int. Cl.: B60R 13/02

(54) **Abdeckung für das Dachmodul eines Kraftfahrzeuges**
Cover for the roof module of a vehicle
Couvercle pour le module de toit d'un véhicule

(30) Priorität: 29.11.2005 DE 202005018650 U
(43) Veröffentlichungstag der Anmeldung: 30.05.2007
(73) Patentinhaber: Dr. Schneider Kunststoffwerke GmbH, 96317 Kronach-Neuses (DE)
(72) Erfinder: Quiner, Jürgen, 96352, Wilhelmsthal (DE)
(74) Vertreter: Eichstädt, Alfred

(56) Entgegenhaltungen:
- EP-A2- 1 223 082
- DE-A1-1102004 037 36
- DE-C1- 19 728 820
- DE-U1- 20 205 512

## Beschreibung

Die Erfindung betrifft eine Abdeckung, wie sie für das Dachmodul eines Kraftfahrzeugs verwendet werden kann.

Aus der DE 202 05 512 U1 ist bereits eine aus einem Kunststoff bestehende Abdeckung für eine Luftaustrittsöffnung einer Belüftungsanlage in einem Kraftfahrzeug bekannt. Diese bekannte Abdeckung weist einen ersten Abschnitt mit unbeweglichen und/oder beweglichen Luftleitlamellen oder Luftleitrippen sowie einen zweiten Abschnitt mit großlochiger wabenförmiger oder polygoner Rippenstruktur als Träger für eine Zier- oder Lautsprecherabdeckung auf. Die Zier- oder Lautsprecherabdeckung ist einteilig mit dem ersten und zweiten Abschnitt aus Kunststoff gefertigt.

Aus der DE 197 28 820 C1 ist eine ebenfalls aus einem Kunststoffmaterial bestehende, lackierbare LautsprecherAbdeckung bekannt. Diese weist eine Gitterstruktur mit einem Streckmetalleffekt mit sich schiefwinkelig überkreuzenden äquidistanten Kunststoffrippen auf. Die durch die Kunststoffrippen der Gitterstruktur begrenzten Löcher des Gitters weisen jeweils eine Ecke auf, von der zwei gleichlange Schenkel ausgehen, die einen stumpfen Winkel einschließen. Die Enden der Schenkel sind über eine nach außen gerichtete Abrundung miteinander verbunden.

Aus der DE 199 30 371 A1 ist ein Gehäuse mit einer Zugangsabdeckung bekannt. Dabei handelt es sich insbesondere um ein Gehäuse für eine bewegliche Maschine, wobei das Gehäuse eine nachgiebige Abdeckung hat, die einen Zugang zu einem Teil der beweglichen Maschine ermöglicht. Das Gehäuse hat eine äußere Oberfläche, eine innere Oberfläche und eine sich dazwischen erstreckende Öffnung. Die äußere Oberfläche weist einen gekrümmten Bereich auf. Die nachgiebige Abdeckung ist gelenkig an dem Gehäuse angebracht, um wahlweise die Öffnung abzudecken und zum Bewegen zwischen einer ersten offenen Stellung und einer zweiten geschlossenen Stellung. Die nachgiebige Abdeckung bildet normalerweise einen Bogen, der einen ersten Radius hat, der größer ist als der Radius des gekrümmten Bereiches des Gehäuses, wenn sich die nachgiebige Abdeckung in der ersten offenen Stellung befindet. Befindet sich die nachgiebige Abdeckung in der zweiten geschlossenen Stellung, dann bildet die nachgiebige Abdeckung einen Bogen, der einen zweiten Radius hat. Dieser ist kleiner als der erste Radius und entspricht im Wesentlichen dem gekrümmten Bereich des Gehäuses oder passt zu diesem. Die nachgiebige Abdeckung weist ein polymeres Material auf.

Aus der EP 1 223 082 A2 ist ein Kraftfahrzeugdach bekannt. Dieses bekannte Kraftfahrzeugdach ist sandwichartig aus einer Außenschale und einer damit verbundenen, als Dachhimmel aus Schaumkunststoff geformten Innenschale aufgebaut. Weiterhin ist es getrennt von der Fahrzeugkarosserie hergestellt, mit seinen Außenrändern auf einen Karosserierahmen auflegbar und mit diesem fest verbindbar. An der Innenschale sind Hohlräume vorgesehen, die über Gitter mit dem Fahrzeuginnenraum in Verbindung stehen. Die Gitter sind aus dem Schaumkunststoffmaterial der Innenschale selbst und damit einteilig mit voneinander beabstandeten Durchtrittsöffnungen geformt. Die Durchtrittsöffnungen sind schlitzförmig ausgebildet und werden durch aus dem Schaumkunststoffmaterial der Innenschale geformte lamellenartige Rippen begrenzt. Die Rippen sind bezüglich ihrer die Durchtrittsöffnungen begrenzenden Wandungen so ausgerichtet, dass einerseits eine gewünschte Richtung des Lichtausfalls und/oder der Luftströmung erhalten wird.

Weiterhin ist es bereits bekannt, in einem Kraftfahrzeug ein Dachmodul vorzusehen. Dieses Dachmodul ist im Innenraum des Fahrzeugs an der Unterseite des Fahrzeugdaches platziert, mittig zwischen dem Fahrer und dem Beifahrer positioniert und in geringem Abstand vom oberen Rand der Frontscheibe des Kraftfahrzeugs am Fahrzeugdach befestigt. Bestandteil dieses Dachmoduls sind beispielsweise zur Bedienung der Innenraumbeleuchtung vorgesehene Schalter, zur Bedienung eines Schiebe- oder Schiebe-Hebe-Daches vorgesehene Schalter, zur Beleuchtung des Fahrzeuginnenraums vorgesehene Leuchtmittel sowie zugehörige Zuleitungen.

Die Aufgabe der Erfindung besteht darin, eine neue Abdeckung anzugeben, die sich für ein Dachmodul mit erweiterter Funktionalität eignet.

Diese Aufgabe wird durch eine Abdeckung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass die Abdeckung aufgrund ihrer durchgängigen Durchtrittsöffnungen unterschiedlicher Durchtrittswinkel einen Durchtritt von Schall aus verschiedenen Richtungen des Fahrzeuginneren in das Dachmodul und in verschiedene Richtungen des Fahrzeugs aus dem Dachmodul erlaubt.

Insbesondere eignet sich eine Abdeckung gemäß der Erfindung zu einer Verwendung im Zusammenhang mit einem Dachmodul, welches eine Freisprecheinrichtung aufweist. Bei einer derartigen Anwendung sind beispielsweise vier Gruppen von Durchtrittsöffnungen vorgesehen, wobei eine dieser Gruppen Durchtrittsöffnungen aufweist, die in Richtung des Fahrersitzes des Kraftfahrzeugs gerichtet sind. Die zweite dieser Gruppen weist Durchtrittsöffnungen auf, die in Richtung des Beifahrersitzes des Kraftfahrzeugs gerichtet sind. Die dritte Gruppe weist Durchtrittsöffnungen auf, die in Richtung des linken Rücksitzes des Kraftfahrzeugs gerichtet sind. Die vierte Gruppe weist Durchtrittsöffnungen auf, die in Richtung des rechten Rücksitzes des Kraftfahrzeugs gerichtet sind. Folglich können Schallsignale empfangen und gesendet werden. Dabei ist durch die unterschiedlichen Durchtrittswinkel gewährleistet, dass alle Schallsignale ungehindert weitergeleitet werden, da die Öffnungsflächen größer als 40% sind.

Weitere vorteilhafte Eigenschaften der Erfindung ergeben sich aus der Erläuterung eines Ausführungsbeispiels anhand der Figuren. Es zeigt
- Figur 1: eine Ansicht der Innenseite einer Abdeckung gemäß der Erfindung,
- Figur 2: eine Ansicht der Außenseite einer Abdeckung gemäß der Erfindung,
- Figur 3: eine Seitenansicht einer Abdeckung gemäß der Erfindung,
- Figur 4: eine Vorderansicht einer Abdeckung gemäß der Erfindung,
- Figur 5: eine vergrößerte Darstellung des Details Z von Figur 2 und
- Figur 6: eine Skizze zur Veranschaulichung der unterschiedlichen Durchtrittswinkel der Durchtrittsöffnungen in Querrichtung.

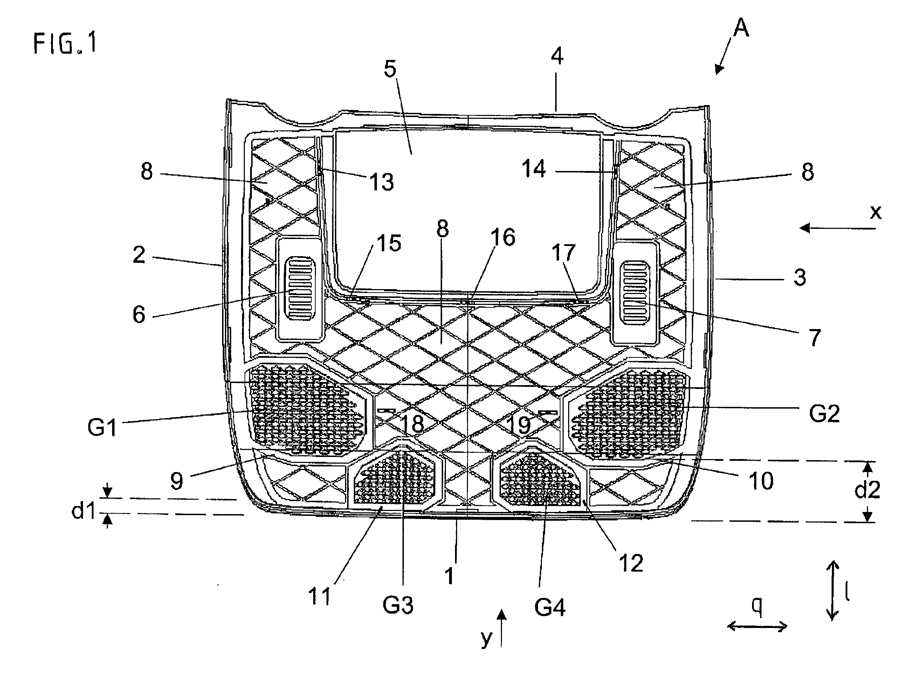

Die Figur 1 zeigt eine Ansicht der Innenseite einer Abdeckung gemäß der Erfindung. Bei dieser Abdeckung handelt es sich um ein einstückiges Kunststoffformteil, das vorzugsweise aus ABS/PC, PPE oder PC besteht.

Diese Abdeckung A weist einen vorderen Rand 1, einen Seitenrand 2, einen Seitenrand 3 und einen hinteren Rand 4 auf. Sie weist weiterhin einen in der Nähe des hinteren Randes mittig vorgesehenen Freiraum 5 auf, durch welchen nach dem Aufsetzen der Abdeckung auf das Dachmodul Bedienelemente und Leuchtmittel des Dachmoduls nach außen ragen.

Weiterhin weist die Abdeckung A kleine Gitter 6 und 7 mit geradlinigen Stegen auf. Hinter diesen Gittern ist das Mikrofon für eine Freisprecheinrichtung positioniert.

Ferner ist der größte Bereich der Innenseite der Abdeckung mit einer Kunststofffläche 8 versehen, welche rautenförmig verlaufende aufgespritzte Stege aufweist.

Im vorderen Bereich der Abdeckung sind insgesamt vier Gruppen von durchgängigen Durchtrittsöffnungen vorgesehen, die in der Figur 1 mit den Bezugszeichen G1, G2, G3 und G4 bezeichnet sind. Jede dieser Gruppen weist eine Vielzahl von Durchtrittsöffnungen auf, durch welche Schallsignale durchtreten können. Jeder Gruppe von Durchtrittsöffnungen sind unterschiedliche Durchtrittswinkel zugeordnet, wie unten noch näher erläutert wird.

Die Gruppe G1 der durchgängigen Durchtrittsöffnungen ist von einer Abdichtzone 9 umgeben, deren umlaufender Rand eine stegförmige Erhöhung aufweist. Die Gruppe G2 der durchgängigen Durchtrittsöffnungen ist von einer Abdichtzone 10 umgeben, deren umlaufender Rand ebenfalls eine stegförmige Erhöhung aufweist. Die Gruppe G3 der durchgängigen Durchtrittsöffnungen ist von einer Abdichtzone 11 umgeben, deren umlaufender Rand ebenfalls eine stegförmige Erhöhung aufweist. Die Gruppe G4 der durchgängigen Durchtrittsöffnungen ist von einer Abdichtzone 12 umgeben, deren umlaufender Rand auch eine stegförmige Erhöhung aufweist.

In diesen umlaufenden Rändern kommen beim Aufsetzen der Abdeckung auf das Dachmodul korrespondierende Ränder von Schalltrichtern zum Liegen. Diese Schalltrichter sind zur Bündelung der eintreffenden Schallsignale vorgesehen. Sie sind vorzugsweise in Form eines einstückigen Schalltrichterbauteils realisiert, das aus einem thermoplastischen Elastomer besteht.

Beim Aufsetzen der Abdeckung auf das Dachmodul wird das genannte Schalltrichterbauteil zwischen der Abdeckung und einem Tragrahmen des Dachmoduls fest verklemmt bzw. fixiert. Bei diesem Aufsetzen rasten Rastmittel 13, 14, 15, 16, 17, 18, 19 der Abdeckung in jeweils zugehörige Gegenstücke des Tragrahmens ein.

Jeder der Schalltrichter steht mit einem Sensor des Dachmoduls in Verbindung, von welchem die durch den jeweiligen Schalltrichter eintretenden Schallsignale detektiert werden. Die Sensoren stehen mit einer Elektronik des Dachmoduls in Verbindung, in welcher die weitere Verarbeitung der detektierten Schallsignale erfolgt.

Sind die genannten Schalltrichter korrekt auf die jeweils zugehörigen umlaufenden Ränder der Gruppen der durchgängigen Durchtrittsöffnungen aufgesetzt, dann sind die einzelnen Schallpfade voneinander entkoppelt, so dass keine durch Rückkopplungseffekte verursachte Störungen auftreten.

Die Gruppe G1 von Durchtrittsöffnungen hat dieselbe Form wie die Gruppe G2 von Durchtrittsöffnungen und ist spiegelbildlich zu dieser angeordnet, wobei die in Längsrichtung 1 der Abdeckung verlaufende Mittellinie als Spiegelachse dient. Die Gruppe G1 von Durchtrittsöffnungen und die Gruppe G2 von Durchtrittsöffnungen weisen denselben Abstand d2 zum vorderen Rand 1 der Abdeckung auf.

Die Gruppe G3 von Durchtrittsöffnungen hat dieselbe Form wie die Gruppe G4 von Durchtrittsöffnungen und ist spiegelbildlich zu dieser angeordnet, wobei ebenfalls die in Längsrichtung 1 der Abdeckung verlaufende Mittellinie als Spiegelachse dient. Die Gruppe G3 von Durchtrittsöffnungen und die Gruppe G4 von Durchtrittsöffnungen weisen denselben Abstand d1 vom vorderen Rand 1 der Abdeckung auf.

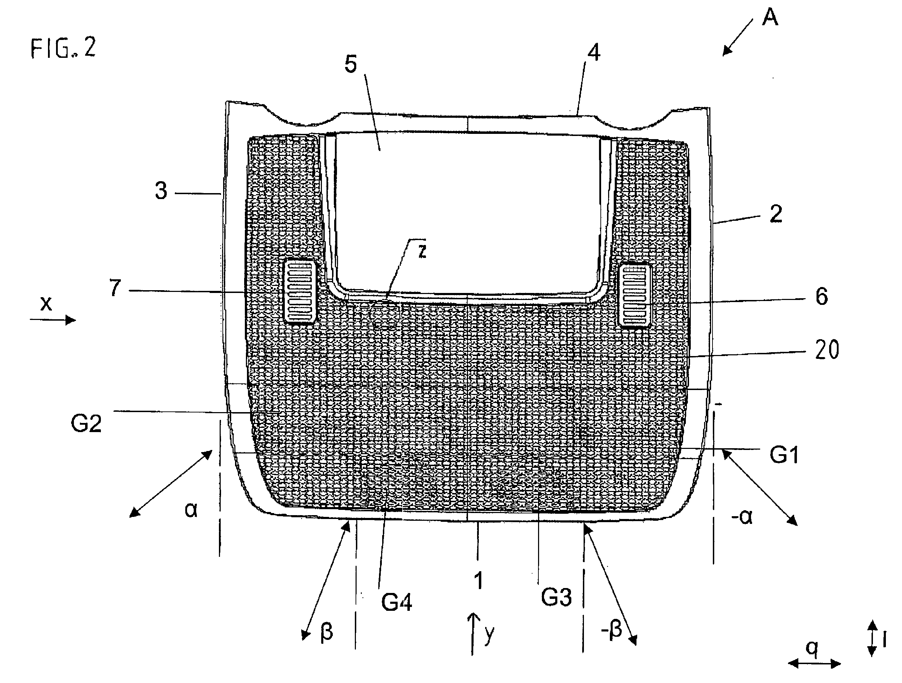

Die Figur 2 zeigt eine Ansicht der Außenseite einer Abdeckung A gemäß der Erfindung. Aus dieser Darstellung sind ebenfalls der vordere Rand 1, der Seitenrand 2, der Seitenrand 3, der hintere Rand 4, der Freiraum 5 sowie die Gitter 6 und 7 ersichtlich.

Weiterhin geht aus der Figur 2 hervor, dass die Außenseite der Abdeckung mit einem Gitter 20 mit Streckmetallstruktur versehen ist. Diese Streckmetallstruktur ist auch in den Bereichen vorgesehen, in denen sich die Gruppen G1, G2, G3, G4 mit den durchgängigen Durchtrittsöffnungen befinden. Diese nahezu durchgängige Streckmetallstruktur verleiht der Außenseite der Abdeckung eine optisch ansprechende Form. Trotz dieser nahezu durchgängigen Streckmetallstruktur ist aufgrund der unterschiedlichen Durchtrittswinkel, die die Durchtrittsöffnungen der verschiedenen Gruppen aufweisen, sichergestellt, dass Schall in einer jeweils gewünschten Richtung durch die Durchtrittsöffnungen durchtreten kann, wobei gewährleistet ist, dass jeweils eine Öffnungsfläche vorliegt, die größer als 40% ist.

Zur Veranschaulichung sind in der Figur 2 die Winkel α, -α, β, -β der Durchtrittsöffnungen der Gruppen G2, G1, G4 und G3 in Querrichtung q der Abdeckung gezeigt. Dabei sind die Durchtrittswinkel der Durchtrittsöffnungen der Gruppe G1 in Richtung des Fahrersitzes des Kraftfahrzeugs, die Durchtrittswinkel der Durchtrittsöffnungen der Gruppe G2 in Richtung des Beifahrersitzes, die Durchtrittswinkel der Durchtrittsöffnungen der Gruppe G3 in Richtung des linken hinteren Fahrzeugsitzes und die Durchtrittswinkel der Durchtrittsöffnungen der Gruppe G4 in Richtung des rechten hinteren Fahrzeugsitzes gerichtet.

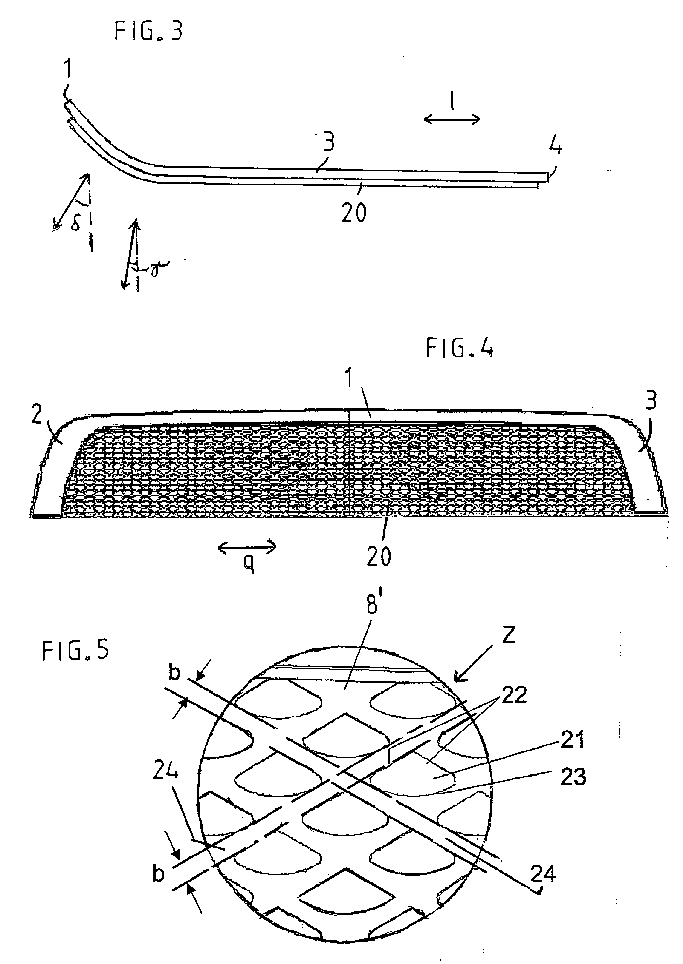

Die Genauigkeit der Ausrichtung der Durchtrittsöffnungen auf die jeweils gewünschte Position wird dadurch weiter verbessert, dass die Abdeckung A in Längsrichtung 1 der Abdeckung gebogen ausgeführt ist. Dies ist aus der Figur 3 ersichtlich, die eine Seitenansicht der Abdeckung in Richtung des in den Figuren 1 und 2 gezeigten Pfeiles x zeigt. Aus der Figur 3 sind der vordere Rand 1 der Abdeckung, der hintere Rand 4, der Seitenrand 3 und das Gitter 20 mit Streckmetallstruktur ersichtlich. Weiterhin geht aus der Figur 3 hervor, dass die in der Nähe des vorderen Randes 1 angeordneten Gruppen G3, G4 von Durchtrittsöffnungen einen anderen Durchtrittswinkel in Längsrichtung 1 aufweisen als die Gruppen G1, G2 von Durchtrittsöffnungen. Dabei weisen die Durchtrittsöffnungen der Gruppen G3 und G4 einen Durchtrittswinkel δ und die Durchtrittsöffnungen der Gruppen G1 und G2 einen Durchtrittswinkel γ auf.

Die Figur 4 zeigt eine Frontansicht der Abdeckung in Richtung des in den Figuren 1 und 2 gezeigten Pfeiles y, d. h. in Fahrtrichtung bzw. in Richtung zur Fahrzeugvorderseite. Aus dieser Darstellung sind der vordere Rand 1, der seitliche Rand 2, der seitliche Rand 3 und das Gitter 20 mit Streckmetallstruktur ersichtlich.

Weiterhin kann die Abdeckung, was in der Figur 4 jedoch nicht dargestellt ist, auch in Querrichtung q gebogen ausgeführt sein. Diese gebogene Ausführung in Querrichtung erleichtert die gezielte Ausrichtung der Durchtrittsöffnungen auf eine gewünschte Position im Fahrzeug weiter.

Die Figur 5 zeigt eine vergrößerte Darstellung des Details Z von Figur 2. Aus dieser Darstellung ist die bevorzugte Querschnittsform der Durchtrittsöffnungen ersichtlich. Diese Durchtrittsöffnungen 21 weisen jeweils eine Ecke auf, von der zwei gleichlange Schenkel 22 ausgehen, die einen stumpfen Winkel von etwa 120° einschließen. Die Enden dieser Schenkel sind über eine Abrundung 23 miteinander verbunden. Zwischen benachbarten Durchtrittsöffnungen sind Stege 24 vorgesehen, die eine Breite b aufweisen.

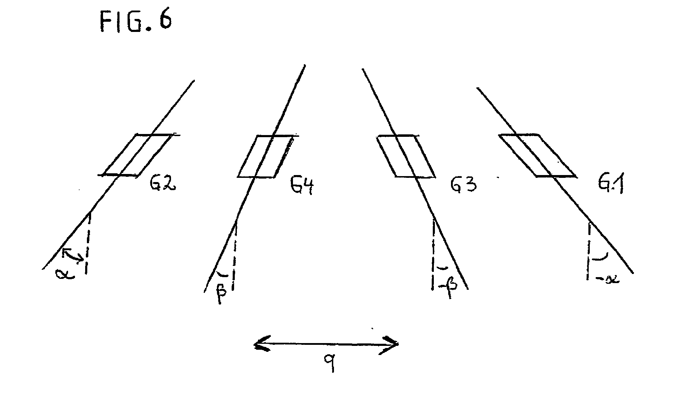

Die Figur 6 zeigt eine Skizze zur Veranschaulichung der unterschiedlichen Durchtrittswinkel der Durchtrittsöffnungen in Querrichtung. Dabei ist auf der linken Seite der Figur eine Querschnittsdarstellung einer Durchtrittsöffnung der Gruppe G2 gezeigt, die in Querrichtung einen Durchtrittswinkel α aufweist. Daneben ist eine Querschnittsdarstellung einer Durchtrittsöffnung der Gruppe G4 dargestellt, die in Querrichtung einen Durchtrittswinkel β aufweist. Auf der rechten Seite der Figur ist eine Querschnittsdarstellung einer Durchtrittsöffnung der Gruppe G1 gezeigt, die in Querrichtung einen Durchtrittswinkel -α aufweist. Daneben ist eine Querschnittsdarstellung einer Durchtrittsöffnung der Gruppe G3 dargestellt, die in Querrichtung einen Durchtrittswinkel - β aufweist.

Eine Abdeckung gemäß der Erfindung wird vorzugsweise zur Abdeckung des Dachmoduls eines Kraftfahrzeugs verwendet, welches eine Freisprecheinrichtung und eine Schall-Signaleinheit enthält. Durch die unterschiedlichen Durchtrittswinkel der Durchtrittsöffnungen wird dabei erreicht, dass Senden und Empfangen aus allen Richtungen des Fahrzeuginnenraums optimiert ist.

In vorteilhafter Weise ist es auch möglich, in das Dachmodul eines Kraftfahrzeugs Lautsprecher zum Zwecke einer Autoradio- oder CD-Wiedergabe zu integrieren. Durch die unterschiedlichen Durchtrittswinkel der Durchtrittsöffnungen wird in diesem Fall erreicht, dass der Schalldurchtritt in Richtung aller Fahrzeuginsassen optimiert ist.

### Bezugszeichenliste

- 1: vorderer Rand der Abdeckung
- 2: Seitenrand der Abdeckung
- 3: Seitenrand der Abdeckung
- 4: hinterer Rand der Abdeckung
- 5: Freiraum in der Abdeckung
- 6: Gitter
- 7: Gitter
- 8: Kunststofffläche mit aufgespritzten Stegen
- 8': Rückseite der Kunststofffläche
- 9: Erste Abdichtzone
- 10: Zweite Abdichtzone
- 11: Dritte Abdichtzone
- 12: Vierte Abdichtzone
- 13 - 19: Rastmittel
- 20: Gitter mit Streckmetallstruktur
- 21: Durchtrittsöffnung
- 22: Schenkel der Durchtrittsöffnung
- 23: Abrundung der Durchtrittsöffnung
- 24: Steg zwischen benachbarten Durchtrittsöffnungen
- A: Abdeckung
- d1, d2: Abstände
- G1: Erste Gruppe von Durchtrittsöffnungen
- G2: Zweite Gruppe von Durchtrittsöffnungen
- G3: Dritte Gruppe von Durchtrittsöffnungen
- G4: Vierte Gruppe von Durchtrittsöffnungen
- 1: Längsrichtung
- q: Querrichtung
- x: Richtung der Seitenansicht
- y: Fahrtrichtung
- Z: Detail

## Patentansprüche

1. Abdeckung für das Dachmodul eines Kraftfahrzeugs, welche aus einem Kunststoffmaterial besteht, **dadurch gekennzeichnet, dass** sie auf ihrer Außenseite mit einem Gitter mit Streckmetallstruktur versehen ist, wobei das Gitter (20) Gruppen (G1,G2,G3,G4) von durchgängigen Durchtrittsöffnungen aufweist und mindestens zwei dieser Gruppen durchgängige Durchtrittsöffnungen unterschiedlicher Durchtrittswinkel (α, -α, β, -β, γ, δ) aufweisen.

2. Abdeckung nach Anspruch 1, **dadurch gekennzeichnet, dass** sie vier Gruppen (G1, G2, G3, G4 ) von durchgängigen Durchtrittsöffnungen aufweist, wobei jeweils zwei Gruppen (G1 und G2 bzw. G3 und G4) von Durchtrittsöffnungen dieselbe Form aufweisen und diese beiden Gruppen jeweils spiegelbildlich zueinander angeordnet sind, wobei die Längsmittellinie der Abdeckung die Spiegelachse ist.

3. Abdeckung nach Anspruch 2, **dadurch gekennzeichnet, dass** die beiden Gruppen (G1 und G2 bzw. G3 und G4) von Durchtrittsöffnungen, die dieselbe Form aufweisen, denselben Abstand (d2 bzw. d1) vom vorderen Rand (1) der Abdeckung haben.

4. Abdeckung nach einem der vorhergehenden Ansprüche, **dadurch gekennzeichnet, dass** sie vier Gruppen (G1,G2,G3,G4) von durchgängigen Durchtrittsöffnungen aufweist, wobei jede Gruppe von Durchtrittsöffnungen in Querrichtung (q) einen anderen Durchtrittswinkel (α, -α, -β, β) aufweist.

5. Abdeckung nach einem der vorhergehenden Ansprüche, **dadurch gekennzeichnet, dass** sie vier Gruppen (G1,G2,G3,G4) von durchgängigen Durchtrittsöffnungen aufweist, von denen zwei Gruppen (G1 und G2) einen ersten Durchtrittswinkel (γ) in Längsrichtung (1) der Abdeckung und die beiden weiteren Gruppen (G3 und G4) einen zweiten Durchtrittswinkel (δ) in Längsrichtung (1) der Abdeckung aufweisen.

6. Abdeckung nach einem der vorhergehenden Ansprüche, **dadurch gekennzeichnet, dass** auf ihrer Innenseite die Gruppen von Durchtrittsöffnungen jeweils von einer Abdichtzone (9,10,11,12) umgeben sind.

7. Abdeckung nach einem der vorhergehenden Ansprüche, **dadurch gekennzeichnet, dass** sie in Längsrichtung (1) gebogen ausgeführt ist.

8. Abdeckung nach einem der vorhergehenden Ansprüche, **dadurch gekennzeichnet, dass** sie in Querrichtung (q) gebogen ausgeführt ist.

9. Abdeckung nach einem der vorhergehenden Ansprüche, **dadurch gekennzeichnet, dass** sie aus ABS/PC, aus PPE oder aus PC besteht.

## Claims

1. Cover for the roof module of a motor vehicle, which consists of a plastics material, **characterised in that** it is provided on its outer side with a grid with expanded metal structure, wherein the grid (20) has groups (G1, G2, G3, G4) of penetrating passage openings and at least two of these groups of penetrating passage openings have different passage angles (α, -α, β, β, γ, δ).

2. Cover according to claim 1, **characterised in that** it has four groups (G1, G2, G3, G4) of penetrating passage openings, wherein in each instance two groups (G1 and G2 or G3 and G4) of passage openings have the same shape and these two groups are respectively arranged in mirror image relative to one another, wherein the longitudinal centre line of the cover is the mirror axis.

3. Cover according to claim 2, **characterised in that** the two groups (G1 and G2 or G3 and G4) of passage openings which have the same shape have the same spacing (d2 or d1) from the front edge (1) of the cover.

4. Cover according to any one of the preceding claims, **characterised in that** it has four groups (G1, G2, G3, G4) of penetrating passage openings, wherein each group of passage openings has in transverse direction (q) a different passage angle (α, -α, -β, β).

5. Cover according to any one of the preceding claims, **characterised in that** it has four groups (G1, G2, G3, G4) of penetrating passage openings, of which two groups (G1 and G2) have a first passage angle (γ) in longitudinal direction (1) of the cover and the two further groups (G3 and G4) have a second passage angle (δ) in longitudinal direction (1) of the cover.

6. Cover according to any one of the preceding claims, **characterised in that** on the inner side thereof the groups of passage openings are respectively surrounded by a sealing zone (9, 10, 11, 12).

7. Cover according to any one of the preceding claims, **characterised in that** it is constructed to be curved in longitudinal direction (1).

8. Cover according to any one of the preceding claims, **characterised in that** it is constructed to be curved in transverse direction (q).

9. Cover according to any one of the preceding claims, **characterised in that** it consists of ABS/PC of PPE or of PC.

## Revendications

1. Couvercle pour le module de toit d'un véhicule automobile, qui est constitué en une matière plastique, **caractérisé en ce qu'**il est pourvu sur son côté extérieur d'un treillis avec une structure en métal déployé, le treillis (20) présentant des groupes (G1, G2, G3, G4) d'ouvertures de passage traversantes et au moins deux de ces groupes d'ouvertures de passage traversantes présentant des angles de passage différents (α, -α, β, -β, γ, δ).

2. Couvercle selon la revendication 1, **caractérisé en ce qu'**il présente quatre groupes (G1, G2, G3, G4) d'ouvertures de passage traversantes, deux groupes respectifs (G1 et G2 ou G3 et G4) d'ouvertures de passage traversantes présentant la même forme et ces deux groupes étant agencés respectivement de manière symétrique l'un par rapport à l'autre, la ligne longitudinale médiane du couvercle étant l'axe de symétrie.

3. Couvercle selon la revendication 2, **caractérisé en ce que** les deux groupes (G1 et G2 ou G3 et G4) d'ouvertures traversantes qui présentent la même forme ont la même distance (d2 ou d1) vis-à-vis du bord avant (1) du couvercle.

4. Couvercle selon l'une des revendications précédentes, **caractérisé en ce qu'**il présente quatre groupes (G1, G2, G3, G4) d'ouvertures de passage traversantes, chaque groupe d'ouvertures de passage présentant en direction transversale (q) un autre angle de passage (α, -α, -β, β).

5. Couvercle selon l'une des revendications précédentes, **caractérisé en ce qu'**il présente quatre groupes (G1, G2, G3, G4) d'ouvertures de passage traversantes, dont deux groupes (G1 et G2) présentent un premier angle de passage (γ) en direction longitudinale (1) du couvercle, et les deux autres groupes (G3 et G4) présentent un second angle de passage (δ) en direction longitudinale (1) du couvercle.

6. Couvercle selon l'une des revendications précédentes, **caractérisé en ce que** sur leur côté intérieur les groupes d'ouvertures de passage sont entourés chacun par une zone d'étanchéité (9, 10, 11, 12).

7. Couvercle selon l'une des revendications précédentes, **caractérisé en ce qu'**il est réalisé cintré en direction longitudinale (1).

8. Couvercle selon l'une des revendications précédentes, **caractérisé en ce qu'**il est réalisé cintré en direction transversale (q).

9. Couvercle selon l'une des revendications précédentes, **caractérisé en ce qu'**il est constitué en ABS/PC, en PPE ou en PC.
